Europäisches Patentamt

(19) European Patent Office

Office européen des brevets

(11) Publication number : **0 128 695**
**B1**

# EUROPEAN PATENT SPECIFICATION

(12)

(45) Date of publication of patent specification :
19.08.87

(51) Int. Cl.⁴ : **B 60 K 17/34**

(21) Application number : **84303593.2**

(22) Date of filing : **29.05.84**

(54) Four-wheel drive transmission system.

(30) Priority : **08.06.83 GB 8315747**

(43) Date of publication of application :
**19.12.84 Bulletin 84/51**

(45) Publication of the grant of the patent :
**19.08.87 Bulletin 87/34**

(84) Designated contracting states :
**DE FR GB IT**

(56) References cited :
**DE-A- 3 218 830**
**DE-B- 1 113 639**
**GB-A- 1 579 366**

(73) Proprietor : **JAGUAR CARS LIMITED**
**Browns Lane**
**Allesley Coventry CV4 9DB West Midlands (GB)**

(72) Inventor : **Cady, John Billington**
**34 The Crescent**
**Hampton in Arden Warwickshire (GB)**

(74) Representative : **Cundy, Anthony Brian et al**
**Anthony Cundy & Company 384 Station Road Dorridge**
**Solihull West Midlands B93 8ES (GB)**

**Description**

This invention relates to the transmission system for a four-wheel drive vehicle, and is particularly useful in a high-performance saloon car.

With a four-wheel drive vehicle, it is necessary to split the drive from the engine to the front and rear axles in such a way that one axle can be driven faster than the other. This is necessary, for example during cornering, when the wheels associated with the two axles travel through different distances. One traditional way of providing this split drive is to provide a differential drive by means of an epicyclic gear unit. For example, see DE-B-1 113 639. With such a known arrangement, the usual variable ratio transmission unit is connected close to the output from the engine between the engine and the epicyclic gear unit. The drive to the axles is thus split in a fixed ratio in proportions dependent on details of the epicyclic gear unit.

An object of the present invention is to provide a four-wheel drive vehicle in which the drive from the engine to the two axles is split in differing proportions under different conditions.

The invention is concerned in particular with a four-wheel drive vehicle having an engine, front and rear axles, a variable ratio transmission unit and a simple epicyclic gear unit arranged with an input from the engine and two outputs leading respectively to the two axles whereby the epicyclic gear unit divides the drive from the engine between the two axles. In accordance with the invention the variable ratio transmission unit is arranged in the drive path between the epicyclic gear unit and one of the axles.

Preferably the drive path incorporating the variable ratio transmission unit is the drive path to the rear axle.

Preferably the epicyclic gear unit comprises a sun gear, planetary gears with a planetary gear carrier and an annulus, characterised in that the carrier acts as the input connected to the engine, the annulus acts as a first output connected to drive one axle via the variable ratio transmission unit and the sun gear acts as the second output connected to drive the other axle.

The ratios of the variable ratio transmission unit may be such that selection of one forward gear ratio gives a front : rear axle torque split of substantially 1 : 3, and selection of another forward gear ratio gives a front : rear axle torque split of substantially 3 : 2.

Preferably the epicyclic gear unit comprises a torsional damper coupled to the planetary gear carrier.

In order that the invention may be better understood, a preferred embodiment will now be described with reference to the accompanying schematic drawing showing a four-wheel drive transmission system with two alternative gearboxes and a simple epicyclic gear.

A planetary gear unit 2 comprises a sun gear 12 in mesh with planet gears 13 carried on a planetary gear carrier 14 and an annulus 16 also in mesh with the planet gears. An engine 1 drives the planetary gear carrier 14 which thus constitutes an input to the epicyclic gear unit 12. Drive to the front axle 10 of the vehicle is taken by the prop shaft 11 from the sun gear 12 serving as an output. Drive to the rear axle 20 of the vehicle is taken from a conventional variable ratio transmission unit hereinafter referred to as a gearbox which may be manual (MG) or automatic (AG), the input 17 of the gearbox being driven by the annulus 16 which thus serves as an output from the epicyclic gear unit. To dampen the input from the engine 1, a torsional vibration damper 15 is mounted on the carrier 14. This damper is optional, and may be of the dampened mass or viscous type.

The torque split between front and rear axles, achieved at the simple epicyclic gear unit 2, is a function of the gear ratio selected in the gearbox (MG or AG). One effect of the epicyclic gear unit 2 is to provide a close ratio gearbox from a standard ratioed saloon car gearbox.

The torque splits, achieved by the epicyclic gear unit 2 in combination with the gearbox, are designed to be the optimum for the intended use of the vehicle. Table 1 below shows a typical example of one system, employing a five forward speed standard gearbox.

TABLE 1

| Gear | Ratio | Torque Split Front: Rear | Revs/ min | Speed MPH | Effective Ratio | |
|------|-------|--------------------------|-----------|-----------|-----------------|---|
| 5 | .789 | 60:40 | 6000 | 152 | .90 | |
| 4 | 1.0 | 54:46 | 6500 | 141 | 1.05 | |
| 3 | 1.390 | 46:54 | 6500 | 111 | 1.33 | 2.93:1 ratio spread |
| 2 | 2.057 | 36:64 | 6500 | 82 | 1.82 | |
| 1 | 3.32 | 26:74 | 6500 | 55 | 2.63 | |

2

The torque split in gear 1, first gear, of about 1 : 3 maximises traction in proportion to dynamic weight transfer. The split of about 3 : 2 in top gear gives stability at speed. Selection of an intermediate gear gives the optimum torque split for starting the vehicle on a slippery surface. It will also be appreciated that the high torque ratio given to the rear axle in low gears facilitates throttle steering around low-speed bends.

An advantage of the splitting of the torque is that it is possible to use a lighter-rated standard transmission ; for example a 77 mm transmission can be rated against a 310 lb ft (4.4 Nm) engine. Moreover, lightweight front axle and drive shaft componentry can be used, since only a fraction (e. g. 63 %) of the maximum engine torque is transmitted to the front axle ; this also results in less torque reaction through the steering.

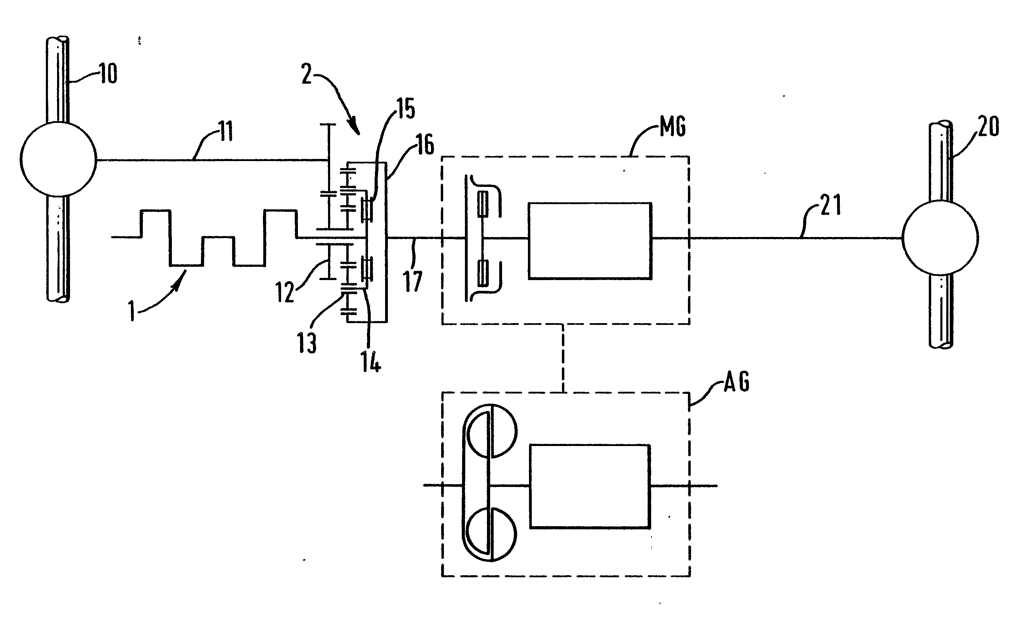

**Claims**

1. A four-wheel drive vehicle having an engine (1), front and rear axles (10 and 20), a variable ratio transmission unit (MG or AG) and a simple epicyclic gear unit (2) arranged with an input (14) from the engine and two outputs (12 and 16) leading respectively to the two axles whereby the epicyclic gear unit divides the drive from the engine between the two axles characterised in that the variable ratio transmission unit (MG or AG) is arranged in the drive path (16, 17, 21) between the epicyclic gear unit (2) and one of the axles (20).

2. A vehicle according to Claim 1 characterised in that the drive path (16, 17, 21) incorporating the variable ratio transmission unit (MG or AG) is the drive path. to the rear axle (20).

3. A vehicle according to Claim 1 or Claim 2 wherein the epicyclic gear unit comprises a sun gear (12), planetary gears (13) with a planetary gear carrier (14) and an annulus (16), characterised in that the carrier (14) acts as the input connected to the engine (1), the annulus (16) acts as a first output connected to drive one axle (20) via the variable ratio transmission unit (MG or AG) and the sun gear (12) acts as the second output connected to drive the other axle (10).

4. A vehicle as claimed in any one of the preceding claims characterised in that the ratios of the variable ratio transmission unit are such that selection of one forward gear ratio gives a front : rear axle torque split of substantially 1 : 3, and selection of another forward gear ratio gives a front : rear axle torque split of substantially 3 : 2.

5. A vehicle as claimed in any one of the preceding claims wherein the epicyclic gear unit comprises a torsional damper (15) coupled to the planetary gear carrier (14).

**Patentansprüche**

1. Vierradgetriebenes Fahrzeug mit einem Motor (1), einer Vorder- und Hinterachse (10 und 20), einem Getriebe mit veränderlicher Übersetzung (MG oder AG) und einem einfachen Planetengetriebe (2), das einen Eingang (14) vom Motor und zwei Ausgänge (12 und 16) hat, die jeweils zu den beiden Achsen führen, wobei das Planetengetriebe den Antrieb vom Motor zwischen den beiden Achsen aufteilt, dadurch gekennzeichnet, daß das Getriebe mit veränderlicher Übersetzung (MG oder AG) im Antriebsweg (16, 17, 21) zwischen dem Planetengetriebe (2) und einer der Achsen (20) angeordnet ist.

2. Fahrzeug nach Anspruch 1, dadurch gekennzeichnet, daß der das Getriebe mit veränderlicher Übersetzung (MG oder AG) aufweisende Antriebsweg (16, 17, 21) der Antriebsweg zu der Hinterachse (20) ist.

3. Fahrzeug nach Anspruch 1 oder Anspruch 2, wobei das Planetengetriebe ein Sonnenrad (12), Planetenräder (13) mit einem Planetenradträger (14) und einen Ring (16) aufweist, dadurch gekennzeichnet, daß der Träger (14) als der mit dem Motor (1) verbundene Eingang wirkt, der Ring (16) als erster Ausgang wirkt, der zum Antreiben einer Achse (20) über das Getriebe mit veränderlicher Übersetzung (MG oder AG) angeordnet ist, und das Sonnenrad (12) als zweiter Ausgang wirkt, der zum Antreiben der anderen Achse (10) angeordnet ist.

4. Fahrzeug nach irgendeinem der vorhergehenden Ansprüche, dadurch gekennzeichnet, daß die Übersetzungsverhältnisse des Getriebes mit veränderlicher Übersetzung derart sind, daß die Wahl eines Vorwärtsganges eine Vorder- : Hinterachsen-Drehmomentaufteilung von im wesentlichen 1 : 3 ergibt, und die Wahl eines anderen Vorwärtsganges eine Vorder- : Hinterachsen-Drehmomentaufteilung von im wesentlichen 3 : 2 ergibt.

5. Fahrzeug nach irgendeinem der vorhergehenden Ansprüche, wobei das Planetengetriebe einen Torsionsdämpfer (15) aufweist, der mit dem Planetenradträger (14) verbunden ist.

**Revendications**

1. Véhicule à quatre roues motrices comprenant un moteur (1), des ponts avant et arrière (10 et 20), une transmission à rapport variable (boîte de vitesses manuelle ou automatique, MG ou AG), un train épicycloïdal simple (2) montée avec une entrée (14) à partir du moteur et deux sorties (12 et 16) qui mènent respectivement aux deux ponts, de sorte que le train épicycloïdal répartie de la force motrice développée par le moteur entre les deux ponts, caractérisé en ce que la transmission à rapport variable (MG ou AG) est intercalée dans la chaîne cinématique (16, 17, 21) comprise entre le train épicycloïdal (2) et l'un des ponts (20).

2. Véhicule selon la revendication 1, caractérisé en ce que la chaîne cinématique (16, 17, 21) qui comprend la transmission à rapport variable (MG ou AG) est la chaîne cinématique menant au pont arrière (20).

3. Véhicule selon la revendication 1 ou 2, dans lequel le train épicycloïdal comprend un planétaire (12), des satellites (13) avec un porte-satellites (14) et une couronne (16), caractérisé en ce que le porte-satellites (14) joue le rôle d'une entrée reliée au moteur (1), la couronne (16) joue le rôle d'une première sortie reliée pour entraîner l'un des ponts (20) à travers la transmission à rapport variable (MG ou AG) et le planétaire (12) joue le rôle d'une deuxième sortie reliée pour entraîner l'autre pont (10).

4. Véhicule selon l'une quelconque des revendications précédentes, caractérisé en ce que les rapports de la transmission à rapport variable sont tels que la sélection d'un rapport d'engrenage de marche avant donne une répartition du couple sur le pont avant/le pont arrière à peu près égale à 1 : 3 tandis que la sélection d'un autre rapport d'engrenage de marche avant donne une répartition du couple sur le pont avant/le pont arrière d'environ 3 : 2.

5. Véhicule selon l'une quelconque des revendications précédentes, dans lequel le train épicycloïdal comprend un amortisseur de torsion (15) relié au porte-satellites (14).

1